# EUROPÄISCHE PATENTSCHRIFT

(11) **EP 2 562 052 B1**
(45) Veröffentlichungstag und Bekanntmachung des Hinweises auf die Patenterteilung: **07.09.2016**
(21) Anmeldenummer: 12005331.9
(22) Anmeldetag: 20.07.2012
(51) Int. Cl.: B60R 13/04, B60Q 1/04, B60Q 1/26, B60Q 1/00, B60Q 5/00, B60R 11/02, G10K 15/02, B60Q 1/32, B60Q 9/00, G09F 21/04, G10K 9/12

(54) **Multifunktionsband für ein Kraftfahrzeug**
Multifunctional trim strip for a motor vehicle
Bande multifonction pour un véhicule automobile

(30) Priorität: 23.08.2011 DE 102011111422
(43) Veröffentlichungstag der Anmeldung: 27.02.2013
(73) Patentinhaber: Audi AG, 85045 Ingolstadt (DE)
(72) Erfinder: Halm, Markus, 85598 Baldham (DE); Schwartze, Sebastian, 85049 Ingolstadt (DE); Winkelmann, Christian, 80796 München (DE); Angermüller, Robert, 85055 Ingolstadt (DE); Brendel, Christian, 85072 Eichstätt (DE); Schmitz, Christoph, 93326 Abensberg (DE); Reuschel, Jens Dietmar, 85053 Ingolstadt (DE); Urban, Tobias, 74354 Besigheim-Ottmarsheim (DE); Nikol, Benjamin, 85055 Ingolstadt (DE)
(74) Vertreter: Thielmann, Frank

(56) Entgegenhaltungen:
- EP-A1- 1 762 428
- EP-A2- 1 927 512
- WO-A1-2009/155654
- DE-A1- 10 060 780
- DE-A1-102009 005 558
- DE-A1-102009 040 898
- DE-A1-102009 057 825
- DE-A1-102009 057 981
- FR-A1- 2 860 823
- GB-A- 2 468 560
- US-A1- 2005 253 699
- US-A1- 2007 030 136
- US-A1- 2010 238 006
- US-A1- 2011 199 199

## Beschreibung

Die vorliegende Erfindung betrifft ein Kraftfahrzeug mit einem Multifunktionsband.

Moderne Kraftfahrzeuge umfassen eine Vielzahl von Anzeige- und Eingabeelementen. Durch entsprechende Anzeigeelemente kann der Fahrer oder die anderen Fahrzeuginsassen über den technischen Zustand des Kraftfahrzeugs bzw. dessen Systeme informiert werden. Zu diesem Zweck umfassen Kraftfahrzeuge üblicherweise einen Bordcomputer bzw. ein Kombiinstrument. Über dies sind sogenannte Head-Up-Displays bekannt, mit denen Informationen auf die Innenseite der Windschutzscheibe projiziert werden können. Ebenso können mit entsprechenden Anzeigenelementen, beispielsweise den Fahrtrichtungsanzeigern, die anderen Verkehrsteilnehmer informiert werden.

Zudem sind in Kraftfahrzeugen eine Vielzahl von Bedienelementen in Form von entsprechenden Knöpfen und Schaltern vorhanden, welche beispielsweise auf dem Armaturenbrett oder der Mittelkonsole angeordnet sind. Bordcomputer in modernen Kraftfahrzeugen können mittlerweile auch über einen Touchscreen bedient werden.

Die DE 10 2009 057 825 A1 beschreibt eine Fahrzeugkarosserie, insbesondere eines Personenkraftfahrzeugs, mit wenigstens einem an der Außenseite angeordneten Verkleidungsteil, wobei dieses Verkleidungsteil wenigstens ein integriertes Funktionselement umfasst. Dieses Funktionselement kann als Licht- bzw. Leuchteinrichtung, Lüftungsabdeckung, Sensor- bzw. Detektoreinrichtung, Wischerantrieb oder dergleichen ausgebildet sein.

Aus der DE 10 2010 013 700 A1 ist eine Blende für ein Kraftfahrzeug bekannt, die eine erste und eine zweite Komponente umfasst. Dabei ist die erste Komponente zumindest teilweise transparent oder semitransparent. Die zweite Komponente weist eine oder mehrere Aussparungen für ein Anzeigeelement und/oder ein Eingabeelement auf.

Aus der GB 2 468 560 A ist ein Fahrzeug bekannt, das eine Anzeigeeinrichtung aufweist, die an einem Karosseriebauteil des Fahrzeugs angeordnet ist. Mit der Anzeigeeinrichtung können Informationen über den Ladezustand eines Energiespeichers des Fahrzeugs ausgegeben werden. Zudem ist die Anzeigeeinrichtung dazu ausgebildet, akustische Signale auszugeben.

Die EP 1 762 428 A1 beschreibt ein Verkleidungsteil für ein Kraftfahrzeug, das zwischen einem vorderen Kotflügel und einer Seitentür angeordnet ist. In das Verkleidungsteil ist eine Luftaustauschöffnung und ein seitlicher Fahrtrichtungsanzeiger, eine Begrenzungsleuchte, eine Umfeldbeleuchtung, ein Sensor und/oder eine Kamera integriert.

Des Weiteren offenbart die DE 10 2009 005 558 A1 ein Kraftfahrzeug mit einer Schalenstruktur, die die Außenhaut eines Karosserieteils bildet. Zudem weist die Schalenstruktur in einem zusammenhängenden Schalenbereich gleichmäßig verteilte und dicht nebeneinander angeordnete Leuchtelemente auf.

Darüber hinaus beschreibt die US 2005/0253699 A1 einen Flachbildschirm, welcher mit einem äußeren Abschnitt eines Kraftfahrzeugs integriert und an diesem befestigt ist. Dabei können Informationen von Notfalldiensten oder Warnungen von öffentlichen Diensten empfangen werden und auf dem Flachbildschirm dargestellt werden.

Schließlich beschreibt die WO 2009/155654 A1 ein Fahrzeug mit einer Eingabeeinrichtung, die an einer Außenfläche angeordnet ist. Die Eingabeeinrichtung kann zudem Lautsprecher, ein Tochpad, eine Kamera oder sonstige Sensoren umfassen.

Die Aufgabe der vorliegenden Erfindung ist es, ein Kraftfahrzeug effizienter und sicherer zu betreiben.

Diese Aufgabe wird erfindungsgemäß gelöst durch ein Kraftfahrzeug mit einem Multifunktionsband gemäß Patentanspruch 1. Demnach wird bereitgestellt ein Kraftfahrzeug mit einem Multifunktionsband, wobei das Multifunktionsaband als bandförmiges Verkleidungselement für eine Karosserie des Kraftfahrzeugs ausgebildet ist, und mit dem Multifunktionsband eine erste Information und eine von der ersten Information unabhängige, zweite Information ausgebbar ist. Das Multifunktionsband ist an der Außenseite der Karosserie des Kraftfahrzeugs anbringbar. Somit kann der Fahrer bereits vor dem Einsteigen in das Kraftfahrzeug entsprechende Informationen von dem Kraftfahrzeug bzw. den Betriebskomponenten des Kraftfahrzeugs abrufen. Mit dem Multifunktionsband können zumindest zwei voneinander unabhängige Informationen für den Fahrzeugführer und/oder die anderen Verkehrsteilnehmer bereitgestellt werden. Die Informationen können beispielsweise einen Zustand des Kraftfahrzeugs bzw. der Systeme des Kraftfahrzeugs wiedergeben. Ebenso können die Informationen Daten über das Umfeld des Kraftfahrzeugs enthalten.

Zudem umfasst das Multifunktionsband zumindest einen Aktor, mit dem akustische Signale ausgebbar sind. Ein solcher Aktor kann ein elektromagnetischer Aktor, ein piezoelektrischer Aktor, ein elektrostatischer Aktor oder dergleichen sein. Eine entsprechende Aussparung in der Karosserie des Kraftfahrzeugs kann als Resonanzkörper genutzt werden. Zudem können dem Fahrer und den anderen Verkehrsteilnehmern Informationen durch akustische Signale bereitgestellt werden. So können zum Beispiel entsprechende Warnsignale ausgegeben werden. Zudem können die anderen Verkehrsteilnehmer durch ein akustisches Signal gewarnt werden. Das Multifunktionsband kann aber auch dazu verwendet werden, ein akustisches Signal oder Geräusch wiederzugeben, um die anderen Verkehrsteilnehmer auf das Kraftfahrzeug aufmerksam zu machen. Hierzu kann beispielsweise bei einem Elektrofahrzeug ein Motorengeräusch wiedergegeben werden. Auf diese Weise kann die Sicherheit im Straßenverkehr erhöht werden.

Des Weiteren umfasst das Kraftfahrzeug einen Umfeldsensor zum Erfassen von Umfelddaten des Kraftfahrzeugs, wobei mit dem Multifunktionsband die Umfelddaten des Kraftfahrzeugs anzeigbar sind. Zudem können die Daten von Umfeldsensoren des Kraftfahrzeugs angezeigt bzw. dargestellt werden. Hier kann beispielsweise eine Information über die Verkehrssituation, die Straßen- und/oder Witterungsverhältnisse dargestellt werden.

Das Multifunktionsband ist bevorzugt in einer entsprechenden Aussparung der Außenseite der Karosserie des Kraftfahrzeugs anbringbar. Das Multifunktionsband kann eine im Wesentlichen bandförmige Gestalt aufweisen. Das Multifunktionsband kann sich beispielsweise an der Außenseite des Kraftfahrzeugs seitlich von den Frontscheinwerfern zu den Rückscheinwerfern erstrecken. Ebenso kann sich das Multifunktionsband nur bereichsweise über einen Seitenbereich des Kraftfahrzeugs erstrecken oder das Multifunktionsband kann mehrere getrennte Bereiche umfassen.

Bevorzugt umfasst das Multifunktionsband zum Eingeben von Daten zumindest ein Bedienelement. Ein solches Bedienelement kann in Form eines entsprechenden Schalters ausgebildet sein. Ebenso kann das Bedienelement als berührungsempfindliche Fläche bzw. als Touchpad ausgebildet sein. Hierzu kann das Bedienelement beispielsweise entsprechende Sensoren umfassen, die eine Berührung, einen Druck oder eine Temperaturänderung erfassen können. Somit kann ein Bedienelement bereitgestellt werden, das robust gegenüber Umwelteinflüssen ist. Durch das Bedienelement in dem Multifunktionsband kann bereits von dem Einsteigen in das Kraftfahrzeug bzw. vor dem Starten des Kraftfahrzeugs entsprechende Bedienhandlungen ausgeführt bzw. Funktionen des Kraftfahrzeugs aktiviert oder deaktiviert werden. Ebenso kann nach dem Verlassen bzw. dem Abstellen des Kraftfahrzeugs das Kraftfahrzeug weiterhin einfach bedient werden.

In einer weiteren Ausführungsform umfasst das Multifunktionsband zum Ausgeben der ersten und/oder zweiten Information zumindest ein optisches Anzeigeelement. Mit dem optischen Anzeigeelement kann der Fahrer auf den Betriebszustand der jeweiligen Komponenten des Kraftfahrzeugs hingewiesen werden. So kann der Fahrer beispielsweise über einen Ladezustand eines Energiespeichers des Kraftfahrzeugs oder über den Füllstand des Kraftstofftanks informiert werden. Insbesondere bei einem Elektro- oder Hybridfahrzeug erhält der Fahrer - beispielsweise beim Aufladen - schnell eine Information über den Ladezustand. Überdies können mit dem Anzeigeelement Hinweise an den Fahrer oder die anderen Verkehrsteilnehmer abgegeben werden. Das Anzeigeelement kann beispielsweise entsprechende Leuchtmittel umfassen. Überdies kann das Multifunktionsband lichtdurchlässige und lichtundurchlässige Bereiche aufweisen, hinter denen ein oder mehre Leuchtmittel angeordnet sind. Das optische Anzeigeelement kann beispielsweise auch als Bildschirm oder Display ausgebildet sein. Mit dem Anzeigeelement können Schriftzeichen, Symbole, farbige Darstellungen, Warnhinweise oder dergleichen dargestellt werden. Das optische Anzeigeelement an der Außenseite des Kraftfahrzeug und die darauf dargestellten Informationen können von den übrigen Verkehrsteilnehmern besonders leicht erkannt werden und somit kann die Sicherheit im Straßenverkehr erhöht werden.

In einer bevorzugten Ausführungsform umfasst das Anzeigeelement zumindest ein Leuchtmittel, mit dem eine Funktionalität einer Beleuchtungseinheit und/oder eines Fahrtrichtungsanzeigers des Kraftfahrzeugs bereitstellbar ist. Als Leuchtmittel können bevorzugt Leuchtdioden, organische Leuchtdioden, Lichtwellenleiter oder dergleichen verwendet werden. Mit dem Multifunktionsband kann so die Funktionalität einer seitlichen Leuchte eines Blinkers bereitgestellt werden. Dieser weist im Vergleich zu den bekannten Blinkerleuchten eine größere Fläche auf, und kann daher von den übrigen Verkehrsteilnehmern besser wahrgenommen werden. Dies gilt insbesondere für die Funktion des Warnblinkers. Ebenso kann das Multifunktionsband als Beleuchtungselement des Kraftfahrzeugs genutzt werden. Das bevorzugt seitlich am Kraftfahrzeug angebrachte Multifunktionsband kann deutlich erkannt werden und somit können beispielsweise Kollisionen bei einem Spurwechsel vermieden werden. Überdies kann das Multifunktionsband dazu beitragen, dass das Kraftfahrzeug bei schlechten Sichtverhältnissen von den übrigen Verkehrsteilnehmern besser wahrgenommen werden kann. Auf diese Weise kann die Sicherheit für die Fahrzeuginsassen und die übrigen Verkehrsteilnehmer gesteigert werden. Zusätzlich kann mit dem Multifunktionsband eine erweiterte Coming-Home-Funktion ermöglicht werden, die dem Fahrer nach dem Abstellen des Kraftfahrzeugs als Beleuchtung dient.

In einer weiteren Ausgestaltung umfasst das Multifunktionsband einen Touchscreen. Ein Multifunktionsband, das die Funktionalität eines Touchscreens aufweist, kann sowohl als Bedienelement als auch als Anzeigelement genutzt werden. Zudem kann somit eine einfache und intuitive Bedienung des Multifunktionsbands ermöglicht werden. Dieser Touchscreen kann bevorzugt so ausgebildet sein, dass er unempfindlich gegenüber Umwelteinflüssen oder Beschädigung ist.

Überdies wird erfindungsgemäß bereitgestellt ein Kraftfahrzeug mit einem zuvor beschriebenen Multifunktionsband. Die zuvor in Bezug auf das Multifunktionsband beschriebenen Weiterbildungen lassen sich auf das Kraftfahrzeug übertragen.

Bevorzugt umfasst das Kraftfahrzeug eine Sensoreinrichtung zum Erfassen zumindest eines Betriebszustands einer Betriebskomponente des Kraftfahrzeugs, wobei mit dem Multifunktionsband der zumindest eine Betriebszustand anzeigbar ist. Somit kann der Fahrer auf eine Fehlfunktion der Betriebskomponente des Kraftfahrzeugs hingewiesen werden. Ebenso kann er auf einen kritischen Füllstand des Kraftstofftanks bzw. auf einen kritischen Ladezustand eines elektrischen Energiespeichers hingewiesen werden. Mit dem Multifunktionsband sollen zumindest alle Informationen dargestellt werden können, die momentan mit einem Bordcomputer bzw. Informationssystem des Kraftfahrzeugs ausgegeben werden.

Ebenso kann das Multifunktionsband zur Kommunikation bzw. Datenübertragung zwischen verschiedenen Kraftfahrzeugen genutzt werden. Zu diesem Zweck kann das Multifunktionsband eine entsprechende Sende- und Empfangseinrichtung umfassen. Zudem kann das Multifunktionsband zur Kommunikation anderen Systeme oder Komponenten im Umfeld des Kraftfahrzeugs genutzt werden. So kann es beispielsweise mit Systemen des Hauses des Fahrers gekoppelt sein. Hier kann der Fahrer durch das Multifunktionsband beispielsweise darauf hingewiesen werden, dass er vergessen hat, das Licht oder den Herd auszuschalten. Somit kann mit dem Multifunktionsband der Komfort und die Sicherheit deutlich erhöht werden.

Schließlich ist mit dem Multifunktionsband ein Öffnen und/oder ein Schließen der Türen, eines Tankdeckels und/oder einer Heckklappe des Kraftfahrzeugs bewirkbar. Zudem kann das Multifunktionsband mit dem Schlüssel des Kraftfahrzeugs gekoppelt sein, wodurch das Kraftfahrzeug auf- und abgeschlossen werden kann. Zusätzlich kann mit dem Multifunktionsband ein Öffnen und/oder Schließen der Fenster, eines Schiebedachs oder eines Cabrioverdecks ermöglicht werden. Somit kann das Kraftfahrzeug besonders einfach und komfortabel bedient werden.

Die vorliegende Erfindung wird nun anhand der beigefügten Zeichnungen näher erläutert. Dabei zeigen:
- Fig. 1: eine schematische Seitenansicht eines Kraftfahrzeugs mit einem Multifunktionsband;
- Fig. 2: eine schematische Seitenansicht eines Kraftfahrzeugs mit einem Multifunktionsband in einer weiteren Ausführungsform, und
- Fig. 3: eine geschnittene Seitenansicht einer Anordnung des Multifunktionsbands in einer Karosserie eines Kraftfahrzeugs.

Die nachfolgend näher geschilderten Ausführungsbeispiele stellen bevorzugte Ausführungsformen der vorliegenden Erfindung dar.

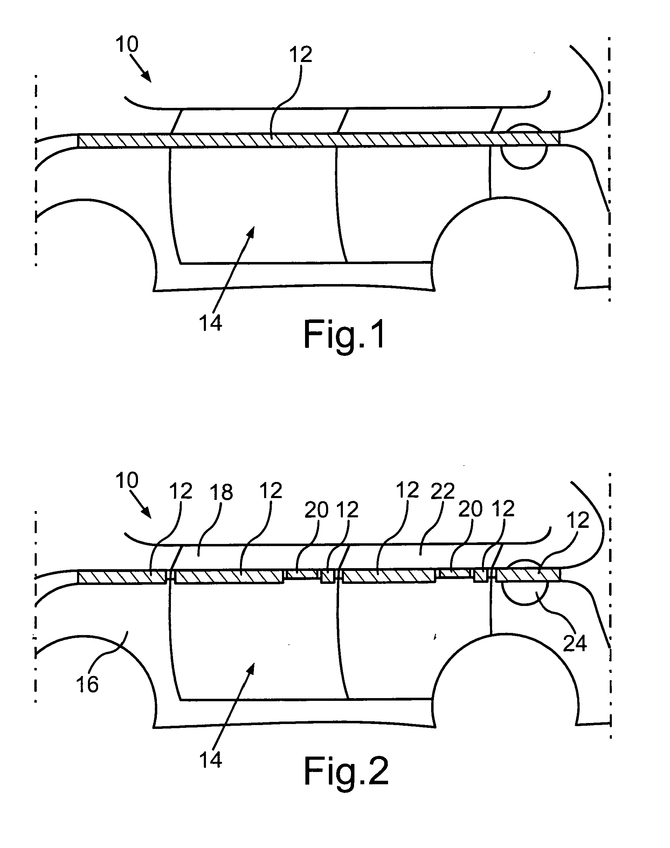

Fig. 1 zeigt eine schematische Seitenansicht eines Kraftfahrzeugs 10, an dem ein Multifunktionsband 12 angeordnet ist. Das Multifunktionsband 12 ist als Verkleidungselement an der Außenseite der Karosserie 14 des Kraftfahrzeugs 10 anbringbar. Das Multifunktionsband 12 ist im wesentlichen bandförmig ausgebildet. In dem in Fig. 1 dargestellten Ausführungsbeispiel erstreckt sich das Multifunktionsband 12 über den äußeren seitlichen Bereich der Karosserie 14 des Kraftfahrzeugs 10 von den Frontscheinwerfern zu den Rückleuchten des Kraftfahrzeugs 10. Ebenso kann sich das Multifunktionsband 12 nur bereichsweise über einen Seitenbereich des Kraftfahrzeugs 10 erstrecken. Des Weiteren kann das Multifunktionsband 12 eine Form aufweisen, die von der in Fig. 1 dargestellten Form abweicht.

Das Multifunktionsband 12 ist dazu ausgebildet, zumindest zwei voneinander unabhängige Informationen auszugeben. Solche Informationen können beispielsweise einen Zustand des Kraftfahrzeugs 10 bzw. der Systeme des Kraftfahrzeugs 10 wiedergeben. Ebenso können die Informationen Daten über das Umfeld des Kraftfahrzeugs 10 enthalten. Um die entsprechenden Daten ausgeben zu können, kann das Multifunktionsband 12 ein entsprechendes optisches Anzeigeelement (hier nicht dargestellt) umfassen. Das Anzeigeelement kann hierzu beispielsweise entsprechende Leuchtmittel umfassen. Ebenso kann das Anzeigelement als Bildschirm bzw. als Display ausgebildet sein. Mit dem Anzeigelement können Schriftzeichen, Symbole, Warnhinweise, farbige Darstellungen oder dergleichen dargestellt werden.

Überdies kann das Multifunktionsband 12 entsprechende Leuchtmittel umfassen, mit denen eine Funktionalität einer Beleuchtungseinheit des Kraftfahrzeugs 10 bereitgestellt werden kann. Als Leuchtmittel können bevorzugt Leuchtdioden, organische Leuchtdioden, Lichtwellenleiter oder dergleichen verwendet werden. Auf diese Weise kann mit dem Multifunktionsband 12 eine entsprechende Beleuchtung des Kraftfahrzeugs 10 an dem seitlichen Bereich der Karosserie 14 ermöglicht werden. Ebenso kann mit dem Multifunktionsband 12 eine Funktionalität der seitlichen Leuchte eines Fahrtrichtungsanzeigers bzw. Blinkers bereitgestellt werden. Ebenso kann mittels des Multifunktionsbands 12 eine Coming-Home-Funktion bereitgestellt werden, die dem Fahrer nach dem Abstellen des Kraftfahrzeugs 10 den Heimweg ausleuchtet.

Außerdem umfasst das Multifunktionsband 12 bevorzugt ein zusätzliches Bedienelement zum Eingeben von Daten. Dieses hier nicht dargestellte Bedienelement kann beispielsweise in Form eines entsprechenden Schalters ausgebildet sein. Bevorzugt ist das Bedienelement allerdings als berührungsempfindliche Fläche bzw. als Touchpad ausgebildet. Zu diesem Zweck kann das Bedienelement entsprechende Sensoren umfassen, mit denen eine Berührung, ein Druck oder eine Temperaturänderung erfasst werden kann. Ebenso kann das Multifunktionsband 12 zumindest einen Touchscreen umfassen, der sowohl als Bedien- als auch als Anzeigeelement verwendet werden kann.

In einer weiteren Ausführungsform kann das Multifunktionsband 12 einen entsprechenden Aktor umfassen, mit dem ein akustisches Signal ausgebbar ist. Somit können an den Fahrer und die üblichen Verkehrsteilnehmer entsprechende Warnsignale ausgegeben werden. Der Aktor kann als Lautsprecher, piezoelektrischer Aktor oder dergleichen ausgebildet sein. Mit diesem Aktor kann auch ein akustisches Signal ausgegeben werden, dass einem Motorengeräusch nachempfunden ist. Somit können insbesondere Elektrofahrzeuge von den übrigen Verkehrsteilnehmern und insbesondere von Personen mit Sehbehinderung besser wahrgenommen werden.

Das Kraftfahrzeug 10 umfasst üblicherweise eine oder mehrere Sensoreinrichtungen, mit denen der Betriebszustand der einzelnen Betriebskomponenten des Kraftfahrzeugs 10 erfasst werden kann. Dabei können bereits im Kraftfahrzeug 10 vorhandene Sensoren genutzt werden. Mit diesen Sensoreinrichtungen kann beispielsweise der Ladezustand eines elektrischen Energiespeichers des Kraftfahrzeugs 10 ermittelt werden. Ebenso kann mit dem einen oder den mehreren Sensorelementen der Betriebszustand bzw. die Funktionalität der einzelnen Betriebskomponenten des Kraftfahrzeugs 10 ermittelt werden. Überdies kann das Kraftfahrzeug 10 Umfeldsensoren umfassen, mit denen entsprechende Umfeldgrößen des Kraftfahrzeugs 10 ermittelt werden können. Solche Umfeldsensoren können beispielsweise optische Sensoren, ein Navigationssystem, oder dergleichen sein. Überdies kann das Kraftfahrzeug 10 eine entsprechende Sende- und Empfangseinrichtung umfassen, mit der Daten bzw. Informationen von anderen Kraftfahrzeugen oder Systemen im Umfeld des Kraftfahrzeugs an das Kraftfahrzeug 10 übermittelt werden können. Somit kann das Multifunktionsband 12 über eine entsprechende Datenverbindung mit anderen Kraftfahrzeugen oder beispielsweise mit dem Haus des Fahrers verbunden sein.

Fig. 2 zeigt eine schematische Darstellung eines Kraftfahrzeugs 10 in einer Seitenansicht, wobei an dem Kraftfahrzeug 10 ein Multifunktionsband 12 angeordnet ist. In der vorliegenden Ausführungsform ist das Multifunktionsband 12 in mehrere Bereiche unterteilt bzw. besteht aus mehreren Einzelteilen. Vorliegend befindet sich ein erster Teil des Multifunktionsbands 12 auf dem vorderen Kotflügel 16 des Kraftfahrzeugs 10. Weiterhin befindet sich ein weiterer Teil des Multifunktionsbands 12 auf der Außenseite der vorderen Tür 18 des Kraftfahrzeugs 10. Hierbei kann das Multifunktionsband 12 durch einen Türgriff 20 unterteilt sein. Ebenso ist es denkbar, dass das Multifunktionsband 12 den Türgriff 20 entsprechend umgibt. Eine ähnliche Anordnung ergibt sich für die hintere Tür 22 des Kraftfahrzeugs 10. Für einen Tankdeckel 24 des Kraftfahrzeugs 10 kann ebenso eine entsprechende Aussparung vorgesehen werden. Hierbei ist es ebenso denkbar, dass sich das Multifunktionsband 12 über den Tankdeckel 24 hinweg erstreckt.

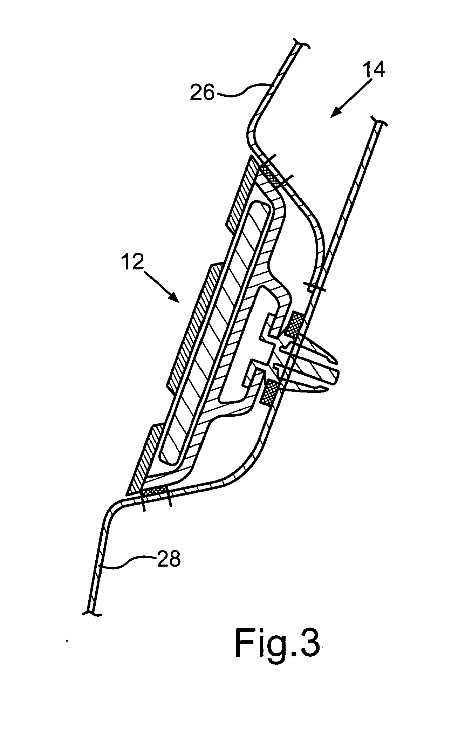

Fig. 3 zeigt eine geschnittene Seitenansicht einer Anordnung des Multifunktionsbands 12 in einer Aussparung der Karosserie 14 des Kraftfahrzeugs. Die Karosserie 14 ist vorliegend aus einem ersten Karosserieblech 26 und einem zweiten Karosserieblech 28 gebildet. Das Multifunktionsband 12 wird mit elektrischer Energie aus dem Bordnetz des Kraftfahrzeugs 10 versorgt. Hierzu umfasst das Multifunktionsband üblicherweise ein hier nicht dargestelltes Steckerelement. Des Weiteren ist das Multifunktionsband 12 mit den Sensoren des Kraftfahrzeugs 10 verbunden. Hierzu kann eine entsprechende Datenschnittstelle bzw. eine Verbindung zu einen Datenbus des Kraftfahrzeugs 10 vorgesehen sein. Das Multifunktionsband 12 auch mit entsprechenden Aktoren im Kraftfahrzeug 10 verbunden sein. Somit kann es beispielsweise ermöglicht werden, durch die Betätigung eines Bedienelements des Multifunktionsbands 12 die Türen, den Kofferraum und/oder die Tankklappe des Kraftfahrzeugs 10 zu öffnen oder zu schließen.

Das Multifunktionsband 12 ist mit der Karosserie 14 des Kraftfahrzeugs 10 über entsprechende Verbindungselemente verbunden. Hierzu kann beispielsweise eine entsprechende Schnappverbindung vorgesehen sein. Ebenso sind entsprechende Schraub- und/oder Klebeverbindungen denkbar. Zudem kann ein entsprechendes hier nicht dargestelltes Dichtungselement vorgesehen sein, dass zwischen dem Multifunktionsband 12 und der Karosserie 14 angeordnet ist.

## Patentansprüche

1. Kraftfahrzeug (10) mit einem Multifunktionsband (12), wobei
- das Multifunktionsband (12) als bandförmiges Verkleidungselement für eine Karosserie (14) des Kraftfahrzeugs (10) ausgebildet ist, und
- mit dem Multifunktionsband (12) eine erste Information und eine von der ersten Information unabhängige, zweite Information ausgebbar ist, und wobei
- das Multifunktionsband (12) zumindest einen Aktor umfasst, mit dem akustische Signale ausgebbar sind,
**dadurch gekennzeichnet, dass**
- das Kraftfahrzeug (10) einen Umfeldsensor zum Erfassen von Umfelddaten des Kraftfahrzeugs (10) und/oder zum Empfangen von Information über eine Verkehrssituation, Straßen- und/oder Witterungsverhältnisse umfasst, wobei mit dem Multifunktionsband (12) die Umfelddaten des Kraftfahrzeugs (10) und/oder die Information über die Verkehrssituation, die Straßen- und/oder Witterungsverhältnisse anzeigbar sind und
- das Multifunktionsband (12) an der Außenseite der Karosserie (14) des Kraftfahrzeugs (10) angebracht ist,
- von einem Fahrer die erste und die zweite Informationen von dem Kraftfahrzeug (10) bereits vor einem Einsteigen in das Kraftfahrzeug (10) abrufbar sind.

2. Kraftfahrzeug (10) nach Anspruch 1,
**dadurch gekennzeichnet, dass**
das Multifunktionsband (12) zum Eingeben von Daten zumindest ein Bedienelement umfasst.

3. Kraftfahrzeug (10)nach Anspruch 1 oder 2,
**dadurch gekennzeichnet, dass**
das Multifunktionsband (12) zum Ausgeben der ersten und/oder zweiten Information zumindest ein optisches Anzeigeelement umfasst.

4. Kraftfahrzeug (10)nach Anspruch 3,
**dadurch gekennzeichnet, dass**
das Anzeigeelement zumindest ein Leuchtmittel umfasst, mit dem eine Funktionalität einer Beleuchtungseinheit und/oder eines Fahrtrichtungsanzeigers des Kraftfahrzeugs (10) bereitstellbar ist.

5. Kraftfahrzeug (10)nach einem der vorhergehenden Ansprüche,
**dadurch gekennzeichnet, dass**
das Multifunktionsband (12) einen Touchscreen umfasst.

6. Kraftfahrzeug (10) nach einem der vorhergehenden Ansprüche,
**dadurch gekennzeichnet, dass**
das Kraftfahrzeug (10) eine Sensoreinrichtung zum Erfassen zumindest eines Betriebszustands einer Betriebskomponente des Kraftfahrzeugs (10) umfasst, wobei mit dem Multifunktionsband (12) der zumindest eine Betriebszustand anzeigbar ist.

7. Kraftfahrzeug (10) nach einem der vorhergehenden Ansprüche,
**dadurch gekennzeichnet, dass**
mit dem Multifunktionsband (12) ein Öffnen und/oder ein Schließen der Türen, eines Tankdeckels und/oder einer Heckklappe des Kraftfahrzeugs (10) bewirkbar ist.

## Claims

1. Motor vehicle (10) having a multifunctional strip (12), wherein
- the multifunctional strip (12) is formed as a strip-shaped trim element for a body (14) of the motor vehicle (10), and
- a first piece of information and a second piece of information, independent of the first piece of information, is able to be emitted using the multifunctional strip (12), and wherein
- the multifunctional strip (12) comprises at least one actuator, using which aural signals are able to be emitted,
**characterised in that**
- the motor vehicle (10) comprises an environmental sensor to detect environmental data of the motor vehicle (10) and/or to receive information concerning a traffic situation, road and/or weather conditions, wherein the environmental data of the motor vehicle (10) and/or the information concerning the traffic situation, the road and/or weather conditions are able to be displayed using the multifunctional strip (12), and
- the multifunctional strip (12) is attached to the outer side of the body (14) of the motor vehicle (10),
- the first and the second pieces of information are able to be retrieved from the motor vehicle (10) by a driver before entering the motor vehicle (10).

2. Motor vehicle (10) according to claim 1,
**characterised in that**
the multifunctional strip (12) comprises at least one operating element to input data.

3. Motor vehicle (10) according to claim 1 or 2,
**characterised in that**
the multifunctional strip (12) comprises at least one optical display element to output the first and/or second piece of information.

4. Motor vehicle (10) according to claim 3,
**characterised in that**
the display element comprises at least one illuminant, using which a functionality of a lighting unit and/or a direction indicator of the motor vehicle (10) is able to be provided.

5. Motor vehicle (10) according to one of the preceding claims,
**characterised in that**
the multifunctional strip (12) comprises a touch screen.

6. Motor vehicle (10) according to one of the preceding claims,
**characterised in that**
the motor vehicle (10) comprises a sensor device to detect at least one operating state of an operating component of the motor vehicle (10), wherein the at least one operating state is able to be displayed using the multifunctional strip (12).

7. Motor vehicle (10) according to one of the preceding claims,
**characterised in that**
an opening and/or a closing of the doors, a tank cap and/or a boot lid of the motor vehicle (10) is able to be caused using the multifunctional strip (12).

## Revendications

1. Véhicule automobile (10) avec une bande multifonctionnelle (12),
- la bande multifonctionnelle (12) étant conçue comme un élément d'habillage en forme de bande pour une carrosserie (14) du véhicule automobile (10) et
- une première information et une deuxième information indépendante de la première information pouvant être délivrées avec la bande multifonctionnelle (12), et
- la bande multifonctionnelle (12) comprenant au moins un actionneur avec lequel des signaux sonores peuvent être délivrés,
**caractérisé en ce que**
- le véhicule automobile (10) comprend un capteur d'environnement pour détecter des données d'environnement du véhicule automobile (10) et/ou pour recevoir des informations sur une situation de circulation, des conditions routières et/ou météorologiques, les données d'environnement du véhicule automobile (10) et/ou les informations sur la situation de circulation, les conditions routières et/ou météorologiques peuvent être indiquées avec la bande multifonctionnelle (12) et
- la bande multifonctionnelle (12) est placée sur le côté extérieur de la carrosserie (14) du véhicule automobile (10),
- la première et la deuxième information peuvent être demandées par un conducteur au véhicule automobile (10) avant même la montée dans le véhicule automobile (10).

2. Véhicule automobile (10) selon la revendication 1, **caractérisé en ce que** la bande multifonctionnelle (12) comprend au moins un élément de commande pour l'entrée de données.

3. Véhicule automobile (10) selon la revendication 1 ou 2, **caractérisé en ce que** la bande multifonctionnelle (12) comprend au moins un élément indicateur optique pour délivrer la première et/ou la deuxième information.

4. Véhicule automobile (10) selon la revendication 3, **caractérisé en ce que** l'élément indicateur comprend au moins un moyen lumineux avec lequel une fonctionnalité d'une unité d'éclairage et/ou d'un indicateur de direction du véhicule automobile (10) peut être fournie.

5. Véhicule automobile (10) selon l'une des revendications précédentes, **caractérisé en ce que** la bande multifonctionnelle (12) comprend un écran tactile.

6. Véhicule automobile (10) selon l'une des revendications précédentes, **caractérisé en ce que** le véhicule automobile (10) comprend un dispositif capteur pour détecter au moins un état de fonctionnement d'un composant de fonctionnement du véhicule automobile (10), l'au moins un état de fonctionnement pouvant être indiqué avec la bande multifonctionnelle (12).

7. Véhicule automobile (10) selon l'une des revendications précédentes, **caractérisé en ce que**, avec la bande multifonctionnelle (12), une ouverture et/ou une fermeture des portes, d'un capot de bouchon de réservoir et/ou d'un hayon du véhicule automobile (10) peuvent être déclenchées.
